# EUROPEAN PATENT SPECIFICATION

(11) **EP 4 366 054 B1**
(45) Date of publication and mention of the grant of the patent: **05.11.2025**
(21) Application number: 22901728.0
(22) Date of filing: 29.11.2022
(51) Int. Cl.: H01M 50/204, H01M 50/24, H01M 50/209, H01M 50/262, H01M 50/271, F16J 15/02, F16J 15/06, H01M 50/207, H01M 50/249, H01M 50/258, H01M 50/26, F16J 15/10

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 03.12.2021 KR 20210171755
(43) Date of publication of application: 08.05.2024
(73) Proprietor: LG Energy Solution, Ltd., Seoul 07335 (KR)
(72) Inventor: CHO, Seung Jae, Daejeon 34122 (KR); YANG, Kun Joo, Daejeon 34122 (KR)
(74) Representative: Plasseraud IP
(86) International application number: PCT/KR2022/019110
(87) International publication number: WO 2023/101370

(56) References cited:
- EP-A1- 4 080 656
- KR-A- 20160 058 440
- KR-A- 20170 082 256
- KR-A- 20170 098 583
- KR-A- 20170 098 583
- KR-A- 20200 102 186
- KR-A- 20210 068 862
- KR-A- 20210 135 785

## Description

### [TECHNICAL FIELD]

The present disclosure relates to a battery pack and a device including the same, and more particularly, to a battery pack which is improved in waterproof and dustproof performance, and a device including the same.

### [BACKGROUND]

With the technology development and increased demand for mobile devices, demand for secondary batteries as energy sources has been rapidly increasing. A variety of researches on secondary batteries capable of meeting various needs have been carried out accordingly.

Also, the secondary battery has attracted considerable attention as a power source for an electric vehicle (EV), a hybrid electric vehicle (HEV), a plug-in hybrid electric vehicle (P-HEV) and the like, which have been developed to solve air pollution and the like, caused by existing gasoline and diesel vehicles using fossil fuel.

Therefore, electric vehicles (EVs) that can be operated only by a battery alone, hybrid electric vehicles (HEVs) that use a combination of a battery and an existing engine, and the like have been developed, and some vehicles are commercially available. As a power source of EVs, HEVs, and the like, a secondary battery is mainly used, such as Nickel metal hybride battery. However, recently, research into lithium secondary batteries having high energy density, high discharge voltage and output stability is actively underway.

When such a secondary battery is used as a power source of a vehicle, the secondary battery is used in the form of a battery pack including a plurality of battery modules or battery module assemblies. A vehicle battery pack allows a gasket made of a rubber to locate at a junction between the cases in order to seal the battery pack. However, depending on the shape of the case, a step difference may occur at a portion where the cases are in contact with each other, and an assembly error may occur.

In order to reduce the occurrence of the problems as described above, attempts have been made to form a gasket that improves waterproof and dustproof performance while corresponding to the shape of the case.

Examples of battery packs comprising sealing gaskets are disclosed in documents KR 2017/0098583 A1, KR 2016/0058440 A and EP 4080656 A1.

### [DETAILED DESCRIPTION OF THE INVENTION]

### [Technical Problem]

It is an object of the present disclosure to provide a battery pack which is improved in waterproof and dustproof performance, and a device including the same.

### [Technical Solution]

To this end, the invention relates to a battery pack according to claim 1.

The battery pack after the invention may present one or more features from dependent claims 2 to 12, in any combination allowed by the claims.

### [Advantageous Effects]

According to embodiments of the present disclosure, it is possible to improve the waterproof and dustproof performance of the battery pack by forming a gasket that partially corresponds to the shape of the pack case.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

Fig. 1 is a perspective view of a battery pack according to an embodiment of the present disclosure;
Fig. 2 is an exploded perspective view of a battery pack according to an embodiment of the present disclosure;
Fig. 3 is a diagram showing a gasket according to an embodiment of the present disclosure;
Fig. 4 is a diagram showing a section B1 of Fig. 3;
Fig. 5 is a diagram showing a region including a corner part of a battery pack according to an embodiment of the present disclosure;
Fig. 6(a) is a diagram showing an imaginary circle that forms a flat surface part of a battery pack according to an embodiment of the present disclosure, and Fig. 6(b) is a diagram showing an imaginary circle that forms a corner part of a battery pack according to an embodiment of the present disclosure;
Fig. 7 is a diagram showing a bead that is provided in a gasket according to an embodiment of the present disclosure;
Fig. 8 is a diagram showing a bead that is provided in a fastening part of a gasket according to an embodiment of the present disclosure;
Fig. 9 is a view showing a guide that is provided in a gasket according to an embodiment of the present disclosure;
Fig. 10 is a diagram showing a state in which the pack case is coupled according to an embodiment of the present disclosure; and
Fig. 11 is an enlarged view of a section B2 of Fig. 3.

### [DETAILED DESCRIPTION OF THE EMBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

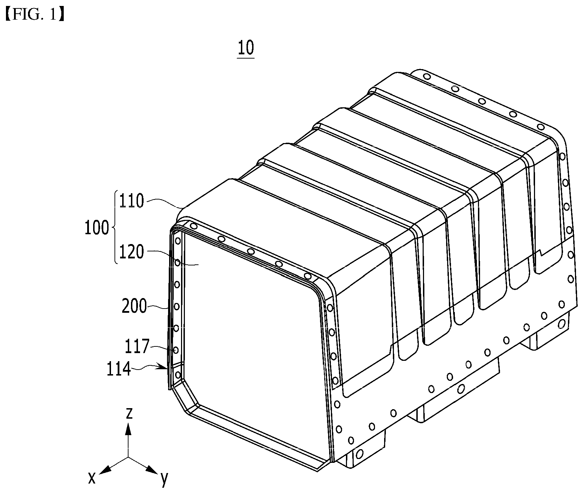

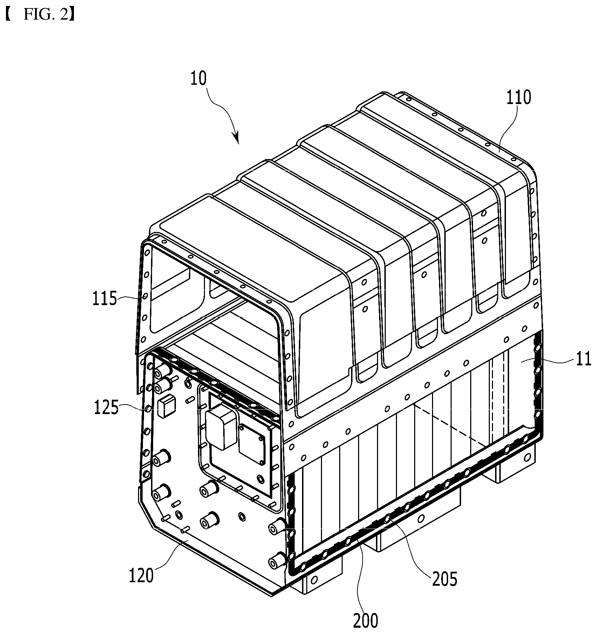

Fig. 1 is a perspective view of a battery pack according to an embodiment of the present disclosure. Fig. 2 is an exploded perspective view of a battery pack according to an embodiment of the present disclosure.

Referring to Figs. 1 and 2, the battery pack 10 according to one embodiment of the present disclosure comprises a pack case 100 that includes a case cover 110 for covering a plurality of battery modules 11, and a case tray 120 coupled with the case cover 110 while housing a plurality of battery modules 11, and comprises a gasket 200 provided between the case cover 110 and the case tray 120 to prevent the infiltration of moisture or dust from the outside.

The battery module 11 may include a battery cell stack and a module frame in which a plurality of battery cells are stacked in a preset direction. The module frame may include an upper frame and a lower frame, and the battery cell stack may be mounted between the upper frame and the lower frame to form a battery module. However, the module frame is not limited to the contents described above, and may be a mono-frame in the form of a metal plate material in which the upper and lower surfaces and both side surfaces are integrated.

Here, the type of the battery cell is not particularly limited, so it may be a pouch-type secondary battery or a prismatic secondary battery, but the pouch-type secondary battery is preferable.

The case cover 110 may have an inverted U-shape so as to cover the upper surface and both side surfaces of the battery module 11, but is not limited thereto.

A cover fastening hole 115 may be provided in the case cover 110. The cover fastening holes 115 may be provided in plural numbers. The cover fastening hole 115 may be a hole that is arranged so as to be spaced apart along the edge of the case cover 110. The cover fastening hole 115 may be a portion penetrating through the case cover 110. A fastening member 117 may be penetrated and fastened to the cover fastening hole 115.

The case tray 120 may have U-type shape covering a lower surface and a front/rear surface of the battery module 11, but is not limited thereto.

A tray fastening hole 125 may be provided in the case tray 120. The tray fastening hole 125 may be provided in plural numbers. The tray fastening hole 125 may be a hole spaced apart along the edge of the case tray 120. The tray fastening hole 125 may be a portion that penetrating through the case tray 120. A fastening member 117 may be penetrated and fastened to the tray fastening hole 125.

The case cover 110 and the case tray 120 may be coupled with their edges corresponding to each other. In this case, the cover fastening hole 115 and the tray fastening hole 125 may be provided at positions corresponding to each other, and the fastening member 117 may be fastened while penetrating through the cover fastening hole 115 and the tray fastening hole 125. That is, the case cover 110 and the case tray 120 are coupled to each other through a fastening member 117 that is fastened while penetrating though the cover fastening hole 115 and the tray fastening hole 125, thereby being able to package the battery module 11. Coupling of the case cover 110 and the case tray 120 through the fastening member 117 may be performed at an edge of the case cover 110 and the case tray 120. The fastening member 117 may be a bolt, nut, or the like.

The case cover 110 and the case tray 120 may be made of a material having stiffness. Therefore, it is possible to protect the plurality of battery modules 11 and electrical components connected thereto from external physical impact.

The gasket 200 is a member that is located between the case cover 110 and the case tray 120, and improves the degree of sealing when the case cover 110 and the case tray 120 are coupled, and can prevent moisture, foreign matter, and the like from penetrating into the battery module 11 side.

The gasket 200 may be provided along the area where edges of the case cover 110 and the case tray 120 are engaged. Therefore, the gasket 200 may correspond to the edge shape of the case cover 110, and may also correspond to the edge shape of the case tray 120.

The gasket 200 according to one embodiment of the present disclosure will be described in more detail below.

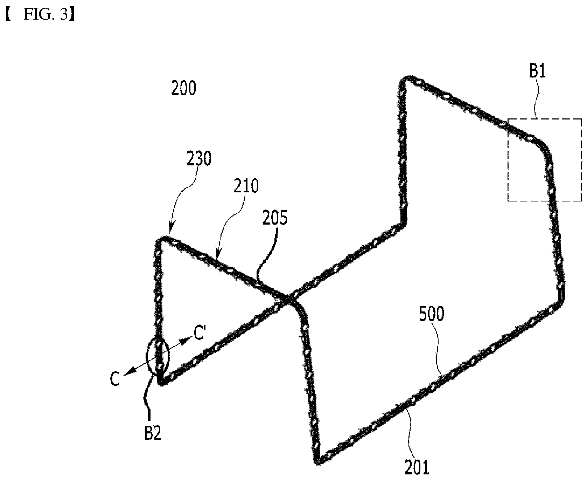

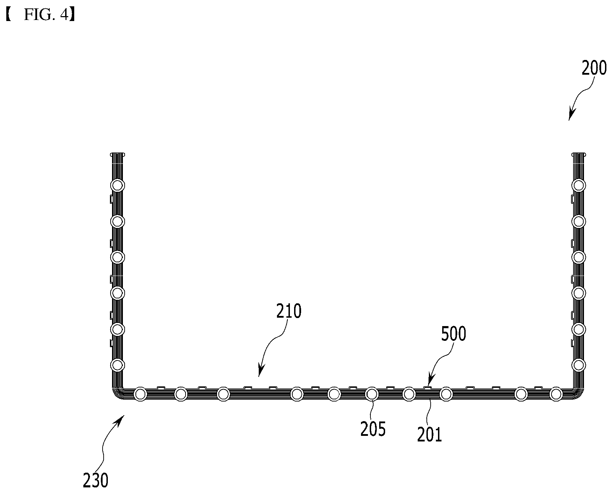

Fig. 3 is a diagram showing a gasket according to an embodiment of the present disclosure. Fig. 4 is a diagram showing a section B1 of Fig. 3.

Referring to Figs. 3 and 4, a gasket 200 according to one embodiment of the present disclosure may include a gasket band 201 and a fastening part 205.

The gasket band 201 may form the overall shape of the gasket 200. The gasket band 201 may be formed corresponding to the edge shapes of the case cover 110 and the case tray 120. The gasket band 201 may have a predetermined length, and may be made of an elastic material such as a rubber.

The fastening part 205 may be a plurality of holes provided in the gasket 200. The fastening part 205 may be a plurality of holes formed so as to be spaced apart from the gasket band 201. The fastening part 205 may be a portion that penetrates the gasket band 201. A fastening member may be penetrated and fastened to the fastening part 205.

The fastening part 205 may be provided in an area corresponding to the cover fastening hole 115 and the tray fastening hole 125 when the pack case 100 and the gasket 200 are coupled. Therefore, the fastening member is fastened while penetrating through the cover fastening hole 115, the gasket 200, and the tray fastening hole 125 at the same time, thereby being able to fix the pack case 100 and the gasket 200 and improve the durability of the battery pack 10.

Gasket 200 may be made of an elastic member. For example, the gasket 200 may be formed of a rubber. Therefore, when pressure is applied to the gasket 200, the shape of the gasket 200 may change as the pressure is applied. That is, the gasket 200 according to one embodiment of the present disclosure may be provided between the case cover 110 and the case tray 120, transmit and receive pressure and change into a three-dimensional shape. In this case, the gasket 200 may include a gasket flat part 210 and a gasket corner part 230. The gasket flat part 210 may be an area where the gasket 200 extends along a flat plane. The gasket flat portion 210 may be an area where the gasket 200 extends without curvature.

The gasket corner part 230 may be an area where the gasket 200 is bent. The gasket corner part 230 may be an area where the gasket 200 is bent while having a curvature. The gasket corner part 230 may be an area where the gasket 200 is bent while corresponding to the shape of the case cover 110. The gasket corner part 230 may be an area where the gasket 200 is bent while corresponding to the shape of the case tray 120.

When pressure is applied to the gasket 200, the shape of the gasket 200 is changed so as to fill a gap formed between the case cover 110 and the case tray 120. Therefore, it is possible to prevent moisture, dust, etc. from entering the battery pack from the outside.

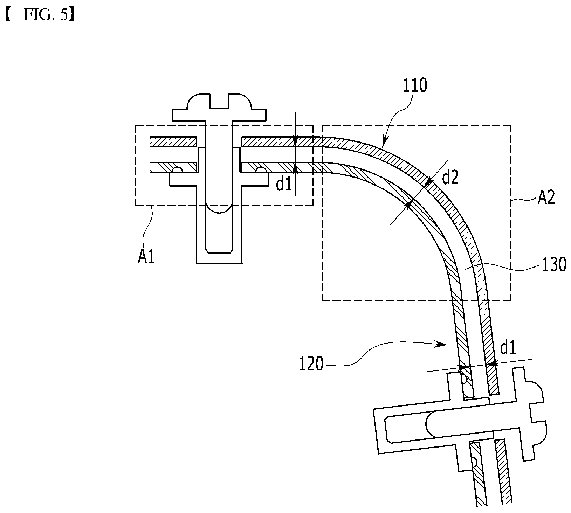

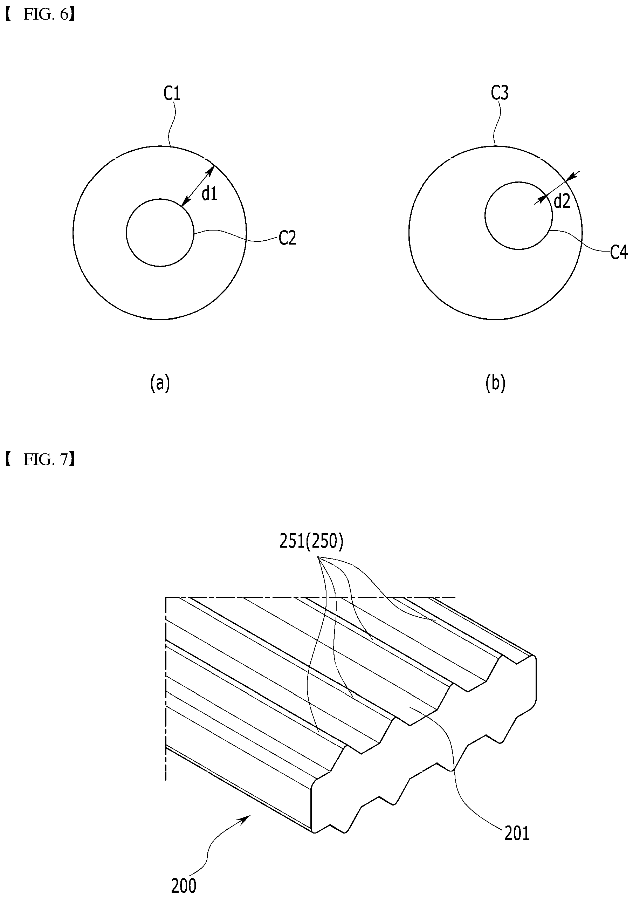

Fig. 5 is a diagram showing a region including a corner part of a battery pack according to an embodiment of the present disclosure. Fig. 6(a) is a diagram showing an imaginary circle that forms a flat surface part of a battery pack according to an embodiment of the present disclosure, and Fig. 6(b) is a diagram showing an imaginary circle that forms a corner part of a battery pack according to an embodiment of the present disclosure.

Referring to Fig. 5, the battery pack according to one embodiment of the present disclosure has a gasket space 130, which is a gap in which the gasket 200 can be provided between the case cover 110 and the case tray 120.

Specifically, the first area A1 of Fig. 5 may be an area where the case cover 110 and the case tray 120 are formed without curvature while having a regular interval. That is, the first area A1 may be an area where the case cover 110 and the case tray 120 are located in parallel. The first area A1 may be an area where the gasket flat part is located. The gasket 200 may be located in the gasket space 130 of the first area A1. A gasket flat part may be located in the gasket space 130 of the first area A1. In the first area A1, the distance between the case cover 110 and the case tray 120 may be a first length d1. In this case, the height of the gasket 200 located in the gasket space 130 of the first area A1 may be compressed to a height corresponding to or smaller than the first length d1.

The second area A2 of Fig. 5 may be an area where the case cover 110 and the case tray 120 are bent while having a curvature. A gasket 200 may be located in the gasket space 130 of the second area A2. A gasket corner part in which the gasket 200 is deformed so as to correspond to the shape of the case cover 110 and the case tray 120 may be located in the gasket space 130 of the second area A2. That is, the second area A2 may be an area where the gasket corner part is located. In the second area A2, the distance between the case cover 110 and the case tray 120 is a second length d2. In this case, the height of the gasket 200 located in the gasket space 130 of the second area A2 may be compressed to a height corresponding to or smaller than the second length d2.

The first length d1 and the second length d2 are different from each other. The first length d1 and the second length d2 may not be constant. Specifically, the second length d2 is shorter than the first length d1. The second length d2 is 90% or less of the total length of the first length d1. In this case, the compression volume of the gasket 200 may be greater in the second area A2 than in the first area A1.

Further, in the second area A2, the curvature of the case tray 120 may be greater than the curvature of the case cover 110. At this time, the curvature of the gasket 200 provided in the second area A2 may correspond to the curvature of the case cover 110 or may be smaller than the curvature of the case tray 120. In this case, when the gasket 200 is provided between the case cover 110 and the case tray 120, the degree of compression of the gasket 200 in the second area A2 may be greater. Therefore, when the gasket 200 is provided between the case cover 110 and the case tray 120, the volume of compression of the gasket 200 in the first area A1 may be smaller than the volume of compression of the gasket 200 in the second area A2. Consequently, the compression volume of the gasket 200 is relatively increased relative to the bent area of the pack case 100, thereby being able to further secure airtightness of the battery pack, and improve the waterproof and dustproof performance of the battery pack.

Referring to Fig. 6, two circles are shown. Specifically, referring to Fig. 6(a), a first circle C1 and a second circle C2 are shown, and referring to Fig. 6(b), a third circle C3 and a fourth circle C4 are shown.

The first circle C1 and the third circle C3 include one area of the inner surface of the case cover 110 located adjacent to the edge of the case tray 120 as one point constituting the first circle C1 and the third circle C3, and may be virtual circles formed while having the same radius on the basis of one center.

The second circle C2 may be a circle which schematically shows an edge area of the case tray 120 in the first area A1 of Fig. 5. In this case, the distance between the first circle C1 and the second circle C2 may be the first distance d1.

The fourth circle C4 may be a circle which schematically shows an edge area of the case tray 120 in the second area A2 of Fig. 5. In this case, the shortest distance among the distances between the third circle C3 and the fourth circle C4 may be the second distance d2.

In summary, the distance between the case cover 110 and the case tray 120 in the first area A1 and the second area A2 is different. The distance in the second area A2 is shorter than the distance in the first area A1. Therefore, since the compression volume of the gasket located in the second area A2 is higher than that of the first area A1, even in the second area A2 of the pack case whose shape is deformed while having a curvature, the waterproof and dustproof performance can be maintained or further improved in the same manner as the first region A1 provided in a fixed shape.

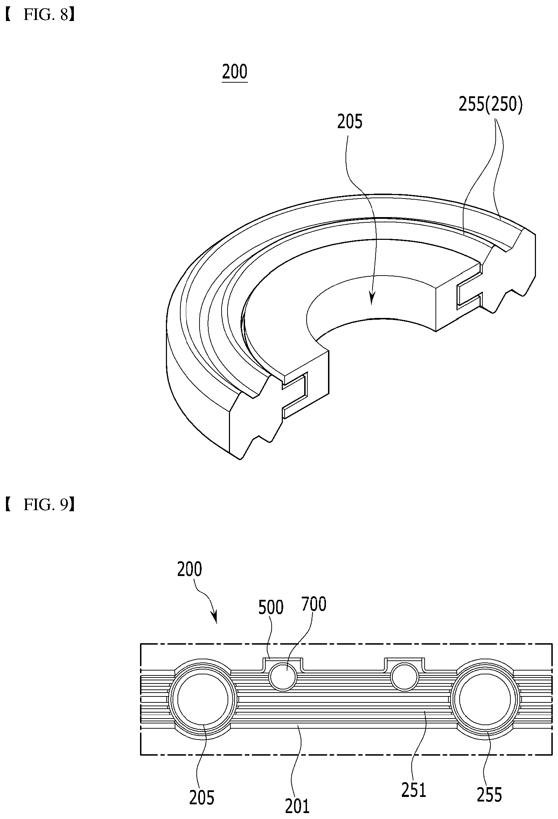

Fig. 7 is a diagram showing a bead that is provided in a gasket according to an embodiment of the present disclosure. Fig. 8 is a diagram showing a bead that is provided in a fastening part of a gasket according to an embodiment of the present disclosure.

Referring to Figs. 7 and 8, a gasket 200 according to one embodiment of the present disclosure may include an elastic bead 250.

The elastic bead 250 is for further improving the sealing performance of the gasket 200 and may be formed on an outer peripheral surface of the gasket 200. The elastic bead 250 may be formed in a shape protruding in a height direction on an outer peripheral surface of the gasket 200. When the case cover 110 and the case tray 120 are coupled, the elastic bead 250 may be elastically deformable while being pressed by the case cover 110 and the case tray 120.

The elastic bead 250 may include a band bead 251 and a fastening bead 255.

The band beads 251 may be provided in plural numbers. The band bead 251 may be formed on an outer peripheral surface of the gasket band 201. The band bead 251 may be formed long along the length direction of the gasket band 201.

When the case cover 110 and the case tray 120 are coupled, the band bead 251 may transmit and receive pressure from the case cover 110 and the case tray 120 in a height direction. The band bead 251 may be an area that protrudes in the height direction of the gasket band 201 along the length direction of the gasket band 201. In this case, the shape of the band bead 251 may be deformed while spreading in the width direction of the gasket band 201.

The fastening bead 255 may be provided in plural numbers. The fastening bead 255 may be formed on an outer peripheral surface of the fastening part 205. The fastening bead 255 may be formed so as to correspond to the shape of the fastening part 205. The fastening bead 255 may be an area that protrudes in the height direction of the fastening part 205.

When the case cover 110 and the case tray 120 are coupled, the fastening bead 255 may transmit and receive pressure from the case cover 110 and the case tray 120 in a height direction. In this case, the shape of the fastening bead 255 may be deformed while spreading in the width direction of the fastening part 205.

After the band bead 251 and the fastening bead 255 protruding in the height direction of the gasket 200 receive pressure, their shapes are elastically deformed, so that the watertightness of the battery pack is further improved, and water or dust, etc. cannot easily enter the battery pack from the outside.

Fig. 9 is a view showing a guide that is provided in a gasket according to an embodiment of the present disclosure.

Referring to Fig. 9, a gasket 200 according to one embodiment of the present disclosure may include a position guider 500 and a guide bead 700.

At least one position guider 500 is provided between the plurality of fastening parts 205 and may protrude from the gasket band 201 to a predetermined length in a direction perpendicular to the longitudinal direction of the gasket band 201.

At least one position guider 500 may have at least the same protrusion length as that of the plurality of fastening parts 205. In addition, at least one position guider 500 may protrude so as not to exceed the edge line of the case cover 110 and the case tray 120.

The protrusion length of the at least one position guider 500 may be a preset protrusion length for positioning the gasket 200 in a proper position. The preset protrusion length is at least the same protrusion length as the protrusion length of the plurality of fastening parts 205, or may be a protrusion length arranged adjacent to the line of the case cover 110 and the case tray 120 so as not to exceed the edge line of the case cover 110 and the case tray 120.

At least one position guider 500 may be arranged apart from the band bead 251 so as not to interfere with the band bead 251.

The position guider 500 may be provided in plural numbers.

The plurality of position guiders 500 may be provided in at least one number between the plurality of fastening parts 205. The plurality of position guiders 500 may be arranged apart from each other by a predetermined distance along the length direction of the gasket band 201.

When the gasket 200 is arranged between the case cover 110 and the case tray 120, the producer or the like can easily visually confirm the positions of the plurality of position guiders 500 through the plurality of position guiders 500, and can quickly ascertain whether it has been arranged in place.

The guide bead 700 is provided on the gasket band 201 and may be provided at a position close to the position guider 500. The guide bead 700 may be provided in a circular shape.

The guide bead 700 can further improve the sealing performance of the gasket 200 together with the elastic bead 250. That is, when the case cover 110 and the case tray 120 are coupled together with the elastic bead 250, the guide bead 700 can be elastically deformed while being pressed by the case cover 110 and the case tray 120.

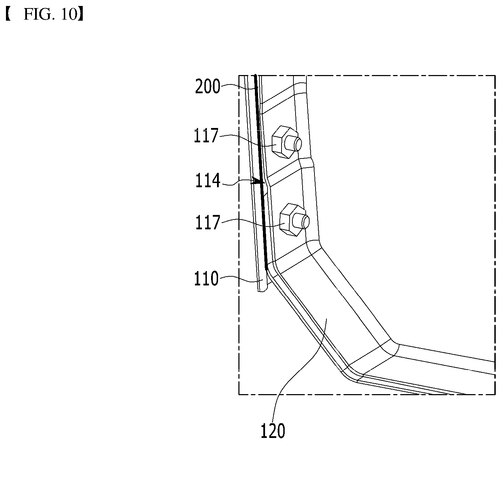

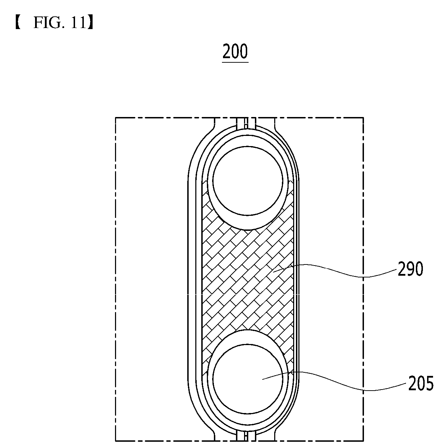

Fig. 10 is a diagram showing a state in which the pack case is coupled according to an embodiment of the present disclosure. Fig. 11 is an enlarged view of a section B2 of Fig. 3.

Referring to Figs. 10 and 11, the battery pack according to one embodiment of the present disclosure may include a stepped part 114 formed on a partial area of the edge where the case cover 110, the gasket 200, and the case tray 120 are sequentially arranged.

Depending on the shape of the components inside the battery pack and the shape of the case constituting the internal battery module, etc., the stepped part 114 may be an area where the distance between the case cover 110 and the case tray 120 is wider than other portions. In the stepped part 114, since the sealing for blocking the inflow of foreign matters from the outside may be weak, it is necessary to supplement it. For this purpose, in one embodiment of the present disclosure, a reinforcement part 290 having a larger surface area than other portions may be formed in one area of the gasket 200 corresponding to the stepped part 114.

As shown in Fig. 11, the reinforcement part 290 may form a concave-convex structure on the surface. Due to the concave-convex structure, the reinforcement part 290 may be formed so as to have a wide surface area. The concave-convex structure may have, for example, a lattice shape, but is not limited thereto, and is not particularly limited as long as it is a structure capable of increasing the surface area.

When the reinforcement part 290 is provided in the stepped part 114, the path through which foreign matters such as moisture flow into the battery pack from the outside becomes longer, thereby effectively blocking the inflow of foreign matters. Specifically, referring to Fig. 10, foreign matters may flow in from the outside through the stepped part 114, which is a gap between the case cover 110 and the case tray 120. By positioning the reinforcement part 290 in the stepped part 114, the length of the inflow path of foreign matters can be increased.

On the other hand, in this figure, although the stepped part 114 is shown as being located at any one part of the pack case 100, but the stepped part 114 may occur at any position of the pack case 100. Therefore, the reinforcement part 290 may be formed in the gasket 200 so as to prevent the sealing of the stepped part 114 from being weakened.

Fastening parts 205, which are holes passing through the reinforcing part 290, may be formed at both ends of the reinforcement part 290. When the case cover 110, the case tray 120 and the gasket 200 are coupled, the cover fastening hole of the case cover 110 and the tray fastening hole of the case tray 120 can be located corresponding to the position of the fastening part 205 of the reinforcement part 290.

The fastening member 117 is penetrated and fastened to the fastening part 205, which allows the reinforcement part 290 to be coupled with the case cover 110 and the case tray 120. That is, since the fastening member 117 is fastened while penetrating through the cover fastening hole, the fastening part 205, and the tray fastening hole at the same time, the gasket 200 can be more securely fixed to the case cover 110 and the case tray 120. The fastening member 117 may be a coupling structure of a bolt and a nut.

The above-mentioned battery pack can be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same, which also falls within the scope of the present disclosure.

### [Description of Reference Numerals]

10: battery pack
100: pack case
110: case cover
120: case tray
130: gasket space
200: gasket
201: gasket band
205: fastening part
210: gasket flat part
230: gasket corner part
250: elastic bead
290: reinforcement part
500: position guider
700: guide bead

## Claims

1. A battery pack (10) comprising:
at least one battery module (11);
a pack case (100) that includes a case cover (110) for covering the at least one battery module (11) and a case tray (120) coupled with an edge of the case cover (110); and
a gasket (200) that is arranged between the case cover (110) and the case tray (120),
wherein the gasket (200) comprises a gasket flat part (210) that is an area where the gasket (200) extends without curvature, and a gasket corner part (230) that is an area where the gasket (200) is deformed to correspond to the shape of the pack case (200) and is bent while having a curvature,
wherein the pack case (100) comprises:
a first area (A1) in which the case cover (110) and the case tray (120) are located in parallel, and a second area (A2) in which the case cover (110) and the case tray (120) are bent while having a curvature, and
a gasket space (130) in which the gasket (200) is located is provided between the case cover (110) and the case tray (120),
**characterized in that**:
a distance (d1) between the case cover (110) and the case tray (120) in the first area (A1) is a first length,
a distance (d2) between the case cover (110) and the case tray (120) in the second area (A2) is a second length, and
the first length is longer than the second length,
the second length being 90% or less of the total length of the first length.

2. The battery pack (10) according to claim 1, wherein:
the gasket flat part (210) is located in the gasket space (130) of the first area (A1), and
the gasket corner part (230) is located in the gasket space (130) of the second area (A2).

3. The battery pack (10) according to claim 1, wherein:
a curvature of the case cover (110) in the second area (A2) is smaller than a curvature of the case tray (120).

4. The battery pack (10) according to claim 3, wherein:
a curvature of the gasket (200) in the second area (A2) corresponds to a curvature of the case cover (120), or is smaller than a curvature of the case tray (110).

5. The battery pack (10) according to claim 1, wherein:
a compression volume of the gasket (200) in the first area (A1) is smaller than a compression volume of the gasket (200) in the second area (A2).

6. The battery pack (10) according to claim 1, wherein:
the gasket (200) comprises a gasket band (201) that forms the overall shape of the gasket (200), and a fastening part (205) that is a plurality of holes formed to be spaced apart from the gasket band (201).

7. The battery pack (10) according to claim 6, wherein:
when the pack case (100) and the gasket (200) are coupled, the fastening part (205) is provided in areas corresponding to cover fastening holes (115) which are a plurality of holes penetrating through the case cover (110), and tray fastening holes (125) that are a plurality of holes penetrating through the case tray (120).

8. The battery pack (10) according to claim 6, wherein:
the gasket (200) comprises an elastic bead (250) that is formed in a shape protruding in a height direction on an outer peripheral surface of the gasket (200).

9. The battery pack (10) according to claim 6, wherein:
the gasket (200) is provided between the fastening parts (205), and comprises a position guider (500) that protrudes from the gasket band (201) in a direction perpendicular to the longitudinal direction of the gasket band (201).

10. The battery pack (10) according to claim 9, wherein:
the gasket (200) comprises a guide bead (700) provided in the gasket band (201) and provided at a position close to the position guider (500).

11. The battery pack (10) according to claim 1, comprising:
a stepped part (114) in which a distance between the case cover (110) and the case tray (120) is wider than other portions,
wherein an area of the gasket (200) corresponding to the stepped part (114) comprises a reinforcement part (290) formed with a larger surface area than other areas of the gasket (200).

12. The battery pack (10) according to claim 11, wherein:
the reinforcement part (290) forms a concave-convex structure on the surface.

## Patentansprüche

1. Spaltanpassungsvorrichtung (100) zum Anpassen eines Spalts zwischen einem Paar von Dichtungsblöcken (10, 20), welche einen Dichtungsabschnitt eines Beutels abdichten, wobei die Spaltanpassungsvorrichtung (100) umfasst:
Stützteile (110), welche an jeweiligen Enden eines Dichtungsblocks (10) bereitgestellt sind, welcher eine Fläche des Dichtungsabschnitts des Beutels presst; und
Spaltanpassungsteile (120);
**dadurch gekennzeichnet, dass** die Spaltanpassungsteile (120) rotierbar mit jeweiligen Enden des anderen Dichtungsblocks (20) gekoppelt sind, welcher die andere Fläche des Dichtungsabschnitts des Beutels presst, und
dass jedes der Spaltanpassungsteile (120) mit einer Mehrzahl von Anpassungsflächen (121) bereitgestellt ist, welche unterschiedliche Höhen entlang einer Umfangsfläche aufweisen, und dass eine aus der Mehrzahl von Anpassungsflächen (121) unterschiedliche Höhen aufweist, wenn ein Rotieren gestützt ist durch jedes der Stützteile (110), um den Spalt zwischen dem Paar von Dichtungsblöcken (10, 20) anzupassen.

2. Sekundärbatterie-Dichtungsausrüstung zum Pressen und Abdichten eines Dichtungsabschnitts eines Beutels, wobei die Sekundärbatterie-Dichtungsausrüstung umfasst:
ein Paar von Dichtungsblöcken, welche dazu eingerichtet sind, den Dichtungsabschnitt des Beutels zu pressen und abzudichten; und
eine Spaltanpassungsvorrichtung (100) nach Anspruch 1, welche dazu eingerichtet ist, einen Spalt zwischen dem Paar von Dichtungsblöcken anzupassen.

3. Sekundärbatterie-Dichtungsausrüstung nach Anspruch 2, wobei, wenn an der Basis des anderen Dichtungsblocks (20) betrachtet, eine Höhe der Anpassungsfläche (121), welche die geringste Höhe unter der Mehrzahl von Anpassungsflächen (121) aufweist, um 119 µm bis 139 µm größer als diejenige einer Pressfläche (11) des anderen Dichtungsblocks (20) ist.

4. Sekundärbatterie-Dichtungsausrüstung nach Anspruch 2, wobei, wenn an der Basis des einen Dichtungsblocks (10) betrachtet, eine Höhe einer Stützfläche (111) des Stützteils (110), welche durch die Anpassungsfläche (121) gestützt ist, um 119 µm bis 139 µm größer als diejenige einer Pressfläche (11) des einen Dichtungsblocks (10) ist.

5. Sekundärbatterie-Dichtungsausrüstung nach Anspruch 2, wobei die Mehrzahl von Anpassungsflächen (121) die gleiche Höhendifferenz von der Anpassungsfläche (121), welche die geringste Höhe aufweist, zu der Anpassungsfläche (121) aufweist, welche die größte Höhe aufweist.

6. Sekundärbatterie-Dichtungsausrüstung nach Anspruch 5, wobei die Mehrzahl von Anpassungsflächen (121) eine Höhendifferenz von 18 bis 22 µm von der Anpassungsfläche (121), welche die geringste Höhe aufweist, zu der Anpassungsfläche (121) aufweist, welche die größte Höhe aufweist.

7. Sekundärbatterie-Dichtungsausrüstung nach Anspruch 2, wobei die Mehrzahl von Anpassungsflächen (121) in einer Reihenfolge der Höhe nach entlang dem Umfang der Spaltanpassungsvorrichtung (120) angeordnet ist.

8. Sekundärbatterie-Dichtungsausrüstung nach Anspruch 2, wobei die Stützfläche (111) des Stützteils (110) und die Mehrzahl von Anpassungsflächen (121), welche durch einander gestützt sind, mit horizontalen Flächen bereitgestellt sind, um in Flächenkontakt miteinander zu treten.

9. Sekundärbatterie-Dichtungsausrüstung nach Anspruch 2, wobei eine Grenzfläche (122) zwischen den entsprechenden Anpassungsflächen (121) als eine geneigte Fläche gebildet ist.

10. Sekundärbatterie-Dichtungsausrüstung nach Anspruch 2, wobei jedes der Stützteile (110) und des Spaltanpassungsteils (120) aus legiertem Werkzeugstahl hergestellt ist.

11. Sekundärbatterie-Dichtungsausrüstung nach Anspruch 2, umfassend einen Kopplungsbolzen (130), welcher das Spaltanpassungsteil (120) mit dem anderen Dichtungsblock (20) rotierbar koppelt,
wobei, wenn der Kopplungsbolzen (130) angezogen ist, das Spaltanpassungsteil (120) an dem Dichtungsblock (20) fixiert ist und es diesem nicht möglich ist, sich zu bewegen, aber wenn gelöst, das Spaltanpassungsteil (120) nicht fixiert ist und diesem möglich ist, um den Kopplungsbolzen (130) zu rotieren.

12. Sekundärbatterie-Dichtungsausrüstung nach Anspruch 2, wobei das Stützteil (110) lösbar an den einen Dichtungsblock (10) gekoppelt ist.

## Revendications

1. Dispositif de réglage d'espace (100) pour régler un espace entre une paire de blocs d'étanchéité (10, 20) qui étanche une partie d'étanchéité d'une poche, le dispositif de réglage d'espace (100) comprenant :
des pièces de maintien (110) prévues à des extrémités respectives d'un bloc d'étanchéité (10) qui appuie sur une surface de la partie d'étanchéité de la poche ; et
des pièces de réglage d'espace (120) ;
**caractérisé en ce que** les pièces de réglage d'espace (120) sont couplées rotatives à des extrémités respectives de l'autre bloc d'étanchéité (20) qui appuie sur l'autre surface de la partie d'étanchéité de la poche,
et **en ce que** chacune des pièces de réglage d'espace (120) est pourvue d'une pluralité de surfaces de réglage (121) présentant des hauteurs différentes le long d'une surface circonférentielle, et l'une de la pluralité de surfaces de réglage (121) présentant des hauteurs différentes lors de la rotation est maintenue par chacune des pièces de maintien (110) pour régler l'espace entre la paire de blocs d'étanchéité (10, 20).

2. Équipement d'étanchéité de batterie secondaire pour presser et étancher une partie d'étanchéité d'une poche, l'équipement d'étanchéité de batterie secondaire comprenant :
une paire de blocs d'étanchéité configurés pour presser et étancher la partie d'étanchéité de la poche ; et
un dispositif de réglage d'espace (100) selon la revendication 1 configuré pour régler un espace entre la paire de blocs d'étanchéité.

3. Équipement d'étanchéité de batterie secondaire selon la revendication 2, dans lequel, vu sur la base de l'autre bloc d'étanchéité (20), une hauteur de la surface de réglage (121) présentant la hauteur la plus basse parmi la pluralité de surfaces de réglage (121) est supérieure de 119 µm à 139 µm à celle d'une surface de pression (21) de l'autre bloc d'étanchéité (20).

4. Équipement d'étanchéité de batterie secondaire selon la revendication 2, dans lequel, vu sur la base d'un bloc d'étanchéité (10), une hauteur d'une surface de maintien (111) de la pièce de maintien (110) maintenue par la surface de réglage (121) est supérieure de 119 µm à 139 µm à celle d'une surface de pression (11) du bloc d'étanchéité (10).

5. Équipement d'étanchéité de batterie secondaire selon la revendication 2, dans lequel la pluralité de surfaces de réglage (121) présentent la même différence de hauteur entre la surface de réglage (121) présentant la hauteur la plus basse et la surface de réglage (121) présentant la hauteur la plus élevée.

6. Équipement d'étanchéité de batterie secondaire selon la revendication 5, dans lequel la pluralité de surfaces de réglage (121) présentent une différence de hauteur de 18 à 22 µm entre la surface de réglage (121) présentant la hauteur la plus basse et la surface de réglage (121) présentant la hauteur la plus élevée.

7. Équipement d'étanchéité de batterie secondaire selon la revendication 2, dans lequel la pluralité de surfaces de réglage (121) sont agencées par ordre de hauteur le long de la circonférence de la pièce de réglage d'espace (120).

8. Équipement d'étanchéité de batterie secondaire selon la revendication 2, dans lequel la surface de maintien (111) de la pièce de maintien (110) et la pluralité de surfaces de réglage (121), qui sont maintenues l'une par l'autre, sont pourvues de surfaces horizontales pour entrer en contact de surface l'une avec l'autre.

9. Équipement d'étanchéité de batterie secondaire selon la revendication 2, dans lequel une surface limite (122) entre les surfaces de réglage (121) correspondantes est formée comme une surface inclinée.

10. Équipement d'étanchéité de batterie secondaire selon la revendication 2, dans lequel chacune de la pièce de maintien (110) et de la pièce de réglage d'espace (120) est en acier à outils allié.

11. Équipement d'étanchéité de batterie secondaire selon la revendication 2, comprenant un boulon d'accouplement (130) qui couple en rotation la pièce de réglage d'espace (120) à l'autre bloc d'étanchéité (20),
dans lequel, lorsque le boulon d'accouplement (130) est serré, la pièce de réglage d'espace (120) est fixée au bloc d'étanchéité (20) et ne peut pas bouger, mais lorsqu'il est desserré, la pièce de réglage d'espace (120) n'est pas fixée et peut tourner autour du boulon d'accouplement (130).

12. Équipement d'étanchéité de batterie secondaire selon la revendication 2, dans lequel la pièce de maintien (110) est couplée de manière détachable au bloc d'étanchéité (10).
